# EUROPÄISCHE PATENTSCHRIFT

(11) **EP 1 593 006 B1**
(45) Veröffentlichungstag und Bekanntmachung des Hinweises auf die Patenterteilung: **19.11.2014**
(21) Anmeldenummer: 04709579.9
(22) Anmeldetag: 10.02.2004
(51) Int. Cl.: G05B 9/02, G05B 23/02

(54) **SICHERHEITSUEBERWACHUNG OHNE REDUNDANZ FUER EINEN ELEKTRISCHEN ANTRIEB (MIT MESSGEBER)**
NON-REDUNDANT SAFETY MONITORING FOR AN ELECTRIC DRIVE MECHANISM (WITH A SENSOR)
SURVEILLANCE DE SECURITE SANS REDONDANCE POUR UN DISPOSITIF D'ENTRAINEMENT ELECTRIQUE (AVEC CAPTEUR DE MESURE)

(30) Priorität: 10.02.2003 DE 10305337
(43) Veröffentlichungstag der Anmeldung: 09.11.2005
(73) Patentinhaber: Lenze Automation GmbH, 31855 Aerzen (DE)
(72) Erfinder: TINEBOR, Manfred, 32683 Barntrup (DE)
(74) Vertreter: Leonhard, Frank Reimund
(86) Internationale Anmeldenummer: PCT/DE2004/000240
(87) Internationale Veröffentlichungsnummer: WO 2004/070924

(56) Entgegenhaltungen:
- EP-A- 0 264 350
- WO-A-99/29474
- US-A1- 2002 152 039
- US-A1- 2002 175 645
- US-B1- 6 199 422

## Beschreibung

Die Erfindung befasst sich mit einem Verfahren zum Überwachen eines insbesondere elektrisch angetriebenen Antriebs, der üblicherweise aus einem Antriebsmotor, einer Welle und einem mit der Welle gekoppelten Antriebsobjekt (Abtrieb) besteht. Bei solchen Antrieben wird zumindest ein Messsignal benötigt, meist auch mehrere Mess-Signale, die in der Antriebstechnik üblicherweise Drehzahl, Beschleunigung und Lage (oder Drehwinkel) genannt werden.

Die Erfindung bezieht sich dabei sowohl auf ein Verfahren zur Erfassung eines unerwünschten Betriebszustandes, wie auch auf einen Messgeber, der gegen Ausfall gesichert ist. Dieser Messgeber ist bevorzugt ein "Funktionsdrehmelder", der in der Antriebstechnik üblicherweise als Resolver bezeichnet wird. Inhaltlich ist ein Resolver ein transformatorisch gekoppelter Messgeber, der ein Nutzsignal abgibt, aus dem zumindest ein für die Antriebstechnik relevantes Systemsignal bestimmt werden kann.

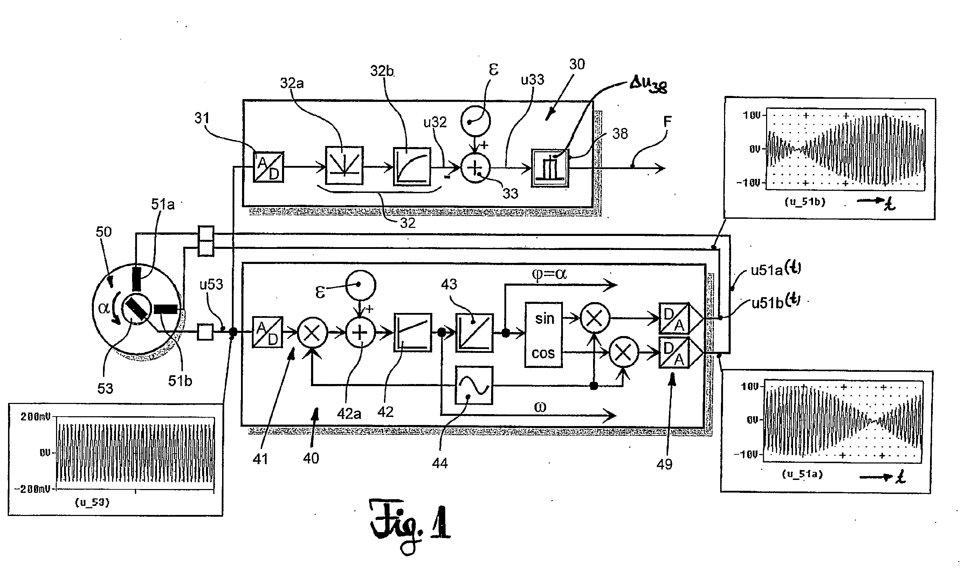

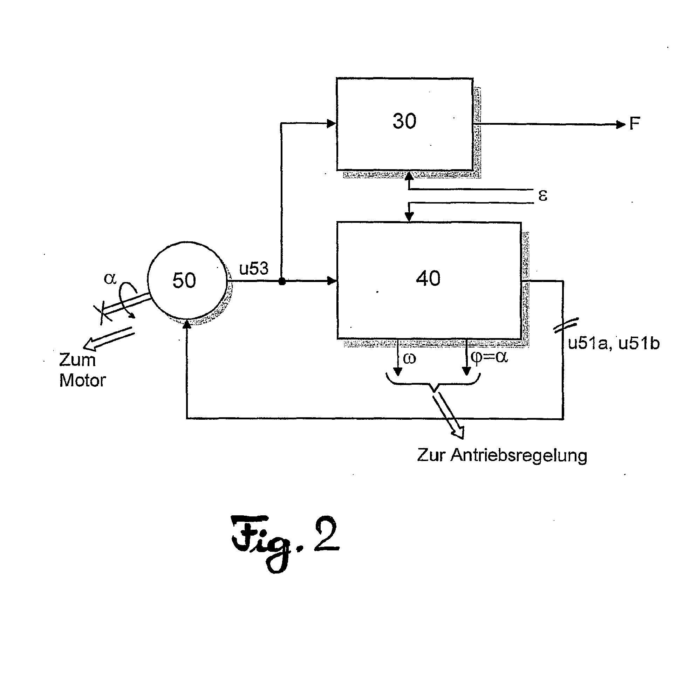

Vom technischen Funktionsprinzip her ist der Funktionsdrehmelder ein rotierender Transformator, dessen Ausgangsspannung eine eindeutige Beziehung zur Position seiner Welle hat. Funktionsdrehmelder eignen sich deshalb als absolute Winkelgeber mit einem Drehbereich von grösser 360°, vgl. dazu beispielsweise die DE-C 196 35 040 (Litton), dort Spalte 1, Zeilen 15 bis 20 sowie Spalte 2, Zeilen 9 bis 13. Während sich bei der bezogenen Schrift der Funktionsdrehmelder auf den rein mechanischen Aufbau bezieht, vgl. die dortige Figur 2, ist die Bestimmung der gewünschten Systemgrößen auch mit der DE-C 38 34 384 (Lenze) möglich. In letzterer Schrift ist ein Verfahren und eine Schaltungsanordnung zur Erzeugung von digitalen Drehzahlen und Drehwinkelinformationen mittels eines Funktionsdrehmelders beschrieben. Dazu sei auf die dortige Figur 1 verwiesen. Sie zeigt eine Regelschaltung als Nachlaufregler, mit der aus einem Betriebssignal der Rotorwicklung des Resolvers die Schaltungsanordnung gespeist wird, welche mit einem Regler eine Regeldifferenz auf Null regelt. Im stationären Zustand entspricht die Ausgangsgröße des Reglers dann der Drehzahl und ihr Integral der Lage (dort "Winkelausgabe" genannt).

Besonders in einer rauen Umgebung, aber auch bei langfristigem Gebrauch muss sichergestellt werden, dass Antriebe keine unzulässige Betriebszustände einnehmen, also keine zu hohen Drehzahlen erfahren, wenn beispielsweise das Messglied für die Drehzahlmessung ausfällt, wie durch einen elektrischen oder mechanischen Fehler im Drehgeber. Solche Probleme werden im Stand der Technik meist durch Redundanz gelöst, namentlich durch Einsatz von mehreren Drehgebern, die dann im Rahmen einer Vergleichsmessung oder einer Mehrheitsentscheidung (bei zumindest drei Messgebern) eine Sicherheitsüberwachung erlauben.

Wie aus US 2002/152039 A1 bekannt, muss beim "Geradeausverfahren" einer Resolverauswertung, vgl. dort Abs. [006], der A/D-Wandler den Bereich zwischen negativem und positivem Spitzenwert der Erregerspannung (±180°) des reinen Signalgebers abbilden können, vgl. dortige Figuren 9/10. Ein A/D-Wandler mit der gleichen Auflösung wie bei einem Nachlaufverfahren würde eine erheblich geringere Winkel- und Drehzahlauflösung erzielen. Dem Vorteil der Signalauflösung bei der Nachlaufregelung stand bisher der Nachteil der problematischen ÜberwachungsMöglichkeit entgegen. Da eine einfache Überwachung bisher nicht bekannt war, war für besondere Sicherheitsanwendungen ein redundanter Geber erforderlich. Bei der (beanspruchten) Verwendung eines Resolvers im Nachlaufregelkreis ist das bekannte Verfahren nicht anwendbar, da der Signalspitzenwert des auszuwertenden Resolversignals im Idealfall - bei ausgeregeltem Nachlaufregler - Null ist. Das Signal im ausgeregeltem Zustand ist damit nicht von einem Nullsignal bei Drahtbruch unterscheidbar.

Es ist eine **technische Problemstellung** der Erfindung, Sicherheit ohne Redundanz zu ermöglichen, und diese Sicherheit für Betriebssignale in der Antriebstechnik zur Verfügung zu stellen. Es sollen dabei keine zusätzlichen Geber für die genannten Betriebssignale erforderlich sein und dennoch soll eine sicherheitsgerichtete Drehzahlbegrenzung eines Antriebs zur Erzielung hoher Schutzlevel möglich werden.

Erreicht wird das gemäß der Erfindung mit einem Verfahren nach Anspruch 1. Der in der Sicherheit zuverlässige Messgeber nach Anspruch 23 ermöglicht die Generierung eines Fehlersignals über eine Überwachungsschaltung, wobei ein nicht zulässiger Betriebszustand erfasst und das Fehlersignal entsprechend erzeugt wird.

Im generellen Bereich der Antriebstechnik wird ein Verstimmungssignal eingesetzt, das in die geschlossene Regelschleife des Messgebers eingespeist wird. Diese dauerhafte Einspeisung des Verstimmungssignals kann außerhalb der Messschleife in einer gesonderten Überwachungsschaltung detektiert werden, wo seine Anwesenheit überwacht wird und bei Ausbleiben dieses - in der Überwachungsschaltung "Kontrollsignal" genannten - Verstimmungssignals wird das Fehlersignal entsprechend abgegeben. Der Überwachungsschaltung wird auch das Ausgangssignal des Messgebers zugeführt (Anspruch 16), welches in gleicher Weise dem geschlossenen Regelkreis zugeführt wird, wobei aber dieses Betriebssignal Teil der geschlossenen Regelschleife ist. Lediglich die Überwachungsschaltung liegt außerhalb der geschlossenen Regelschleife und ist mit ihrem Ausgangssignal nicht in die Ermittlung des regelungstechnischen Signals einbezogen.

Mit dieser besonderen Überwachung werden alle elektrischen Fehler des Drehmelders und dessen Anschlussleitung, wie Unterbrechung oder Kurzschluss, festgestellt und das Fehlersignal entsprechend generiert.

Die Überwachungsschaltung übernimmt die Erkennung des Fehlers, wobei für den Fall des Einsatzes eines transformatorisch-gekoppelten Messgebers im Sinne des "Funktionsdrehmelders" ein Prüfsignal nahe dem Nachlaufregelkreis der Schaltungsanordnung des Funktionsdrehmelders eingespeist wird. Besonders an der Stelle der Regelabweichung, also vor dem zumindest einen Integralanteil aufweisenden Regler des Nachlaufkreises kann die Einfügung des Prüfsignals stattfinden. Dieses Prüfsignal beeinflusst damit den gesamten Regelkreis und stellt bildlich gesprochen eine Verstimmung dar, wenn man davon ausgeht, dass am Eingang des Reglers der Schaltungsanordnung im stationären Fall eine Regelabweichung von Null vorliegt. Diese stationäre Regelabweichung liegt weiterhin vor, nur ist sie beeinflusst von der Einspeisung des Prüfsignals, das seinerseits der Überwachungsschaltung in gleicher Weise (in gleicher Amplitude) zugeführt wird.

Kommt es zu einer Störung des Funktionsdrehmelders, kann die Sicherheitsüberwachung erkennen, dass ein Kontrollsignal sich nicht zu Null ergibt, wenn das Verstimmungssignal subtrahiert wird. Das lässt den Rückschluss darauf zu, dass irgend ein elektrischer oder mechanischer Fehler am Messgeber vorliegt, was zu einer Sicherheitsabschaltung führt, die auf einer niedrigen Spannungsebene veranlasst wird. Das Vorhandensein des Prüfsignals (Anspruch 4, 5 oder 6) wird ständig in der Sicherheitsüberwachung überwacht. Dabei kann das Prüfsignal im Wesentlichen konstant sein. Es kann als Winkelsignal eingespeist werden, spezifisch an der zuvor beschriebenen Stelle der Regelabweichung des Intergralreglers der Nachlaufregelung.

Sowohl der Sicherheitsüberwachung, als auch der Nachlaufregelung wird bevorzugt nicht nur das Prüfsignal, sondern auch das Ausgabesignal (Betriebssignal) des Resolvers zugeführt (Anspruch 2, 16).

Beispiele von zu erkennenden Fehlern sind eine Grenz-Drehzahlüberwachung (Anspruch 7).

Die Bestimmung des Drehzahlwertes oder des Lagewertes erfolgt in der Nachlaufregelung.

Nachdem das Prüfsignal in der Sicherheitsüberwachung zunächst aus dem modulierten Betriebssignal des Funktionsdrehmelders herausgefiltert wird, und dazu keine spezifische Demodulation in der Sicherheitsüberwachung vorgenommen werden muss, wie sie in der Nachlaufregelung durch eine Trägerfrequenz vorgenommen wird, kann mit einer einfachen Schaltungstechnik der Hochfrequenzanteil des Betriebssignales ausgefiltert werden (Anspruch 10, 11 und 12 sowie 17). Dabei ist darauf zu verweisen, dass die Funktionalität vergleichbar sein sollte, die im Anfangsabschnitt der Nachlaufregelung und bei der Sicherheitsüberwachung Einsatz findet.

Das durch die funktionell gleiche Beeinflussung des Signals gewonnene Kontrollsignal sollte im Normalzustand des Antriebes betragsmäßig im Wesentlichen dem Prüfsignal entsprechen, so dass eine subtraktive Kombination (im Sinne eines Vergleichs der betragsmäßigen Größen) zu einem Null-Ergebnis führt (Anspruch 13). Dies ist der Kompensationsfall "im Wesentlichen". Liegt eine zeitlich längere oder eine betragsmäßig größere Abweichung vor, kann das Fehlersignal generiert werden (Anspruch 14,18). Dabei wird der Kompensationsfall verlassen (Anspruch 20). Um nicht zu empfindlich Fehlersignale zu detektieren, kann eine Toleranzspanne vorgesehen sein, beispielsweise durch einen Fensterkomparator, es kann auch eine zeitliche Sperre vorliegen, bevor das Fehlersignal aktiviert wird (Anspruch 18, 14).

Anzumerken ist, dass die zu erfassenden Fehlersignale keine solchen sind, die "regelungstechnisch erfassbar und ausregelbar" sind. Solcherart erfassbare Störeinflüsse sollen durch die reguläre Regelung bzw. Steuerung erfasst werden, während die von dieser Regelung nicht beeinflussbaren "Störgrößen" im Sinne von sicherheitsrelevanten Fehlern durch die Sicherheitsüberwachung gesondert erfasst werden (Anspruch 16).

Um den Einfluss durch das Prüfsignal deterministisch zu halten, sollte dieses Signal zumindest stetig sein, besonders als ein konstanter Wert ausgebildet werden (Anspruch 20, 21 und 22). Es wird zwar in den Regelkreis eingespeist, kann aber bei seiner bekannten Größe in der eigentlichen Regelung berücksichtigt werden (Anspruch 22). Da es deterministisch und in seiner Amplitude bekannt ist, kann es auch in der Sicherheitsüberwachung subtraktiv kombiniert werden, welche Sicherheitsüberwachung dieses Prüfsignal als Verstimmung der Regelabweichung des Nachlaufreglers im Sinne eines Kontrollsignals gesondert bestimmt.

Das in der Nachlaufregelung (der Steuerschaltung) verwendete Modulationssignal kann im Bereich von 4 bis 6 kHz liegen, insbesondere als sinusförmiges Signal, um durch eine Abtastung des Verlaufs dieses Signals, bzw. der Kurvenform eine höhere Auflösung zu erhalten. Beispielsweise wird innerhalb einer Sinus-Schwingung 8 mal abgetastet, was insbesondere bei langsamen Drehzahlen von Vorteil ist.

Besonders vorteilhaft ist der Einsatz des Verstimmungssignals (auch: Prüfsignals) zur Erkennung von Kurzschlüssen in den Anschlussleitungen, den Verbindungsstellen oder der Wicklung des Messgebers. Mit einem aufgeprägten Gleichsignal im Messgeber, der auf die Messgröße keinen Einfluss aufgrund der transformatorischen Kopplung besitzt, könnte allenfalls eine Unterbrechung detektiert werden, nicht aber ein Kurzschluss, der das Gleich-Stromsignal am Messgeber praktisch unverändert belassen würde. Meist sind Fehlerursachen defekte Kabel und Anschlüsse, die mit der Erfindung unabhängig von der Art des Fehlers im Bereich des Messgebers erkannt werden können.

Mit der Erfindung kann Sicherheit ohne zusätzliche Redundanz von Drehgebern zur Verfügung gestellt werden. Es kann demzufolge für eine Antriebsanwendung nur ein solcher sicherheitsüberwachter Sensor, beispielsweise als Funktionsdrehmelder, verwendet werden. Nicht ausgeschlossen ist die Verwendung weiterer Sensoren, wenn es das Anwendungsgebiet erfordert.

Die Sicherheitsüberwachung erstreckt sich dabei zunächst auf den Drehgeber selbst (Anspruch 20), mit dieser Überwachung des Drehgebers wird aber auch der Antrieb als Ganzes und das von dem Antrieb angetriebene Objekt ebenfalls in der Sicherheit überwacht. Die Überwachung erfolgt auf einem potentialmäßig niedrigen Pegel, also nahe der Steuerspannung, nicht auf der Leistungsseite.

Erfindungsgemäß können Kosten durch die Einsparung weiterer redundanter Geber reduziert werden. Montageaufwand kann vermieden werden und Sicherheit kann gleichwohl gewonnen werden.

Ausführungs**beispiele** erläutern und ergänzen die beanspruchten Erfindungen.
- **Figur 1**: veranschaulicht ein Blockschaltbild eines ersten Beispiels.
- **Figur 2**: veranschaulicht einen Übersichtsschaltplan, zur Verdeutlichung des Prüfsignals ε.
- **Figur 3**: sind Signalverläufe (a) bis (f) mit dem ersten Beispiel, für verschiedene Fehlerzustände, die erfasst werden.
- **Figur 4**: sind Signalverläufe (a) bis (f) mit dem ersten Beispiel, für verschiedene Fehlerzustände, die erfasst werden.

**Figur 2** veranschaulicht eine schematische Übersicht über die Funktionseinheiten der hier beschriebenen Sicherheits-Überwachung. Als Messgeber wird ein Funktionsdrehmelder (Resolver) 50 angewendet, der mit der Welle des Antriebes gekoppelt ist. Der Funktionsdrehmelder weist dabei transformatorisch gekoppelte Wicklungen auf, von denen eine mit der Welle mitdreht, während die beiden anderen Wicklungen dem Stator zugeordnet sind und von einer Steuerschaltung 40 mit zwei Wechselsignalen versorgt werden. Die Phasenlage dieser Wechselsignale soll im stationären Zustand der Lage bzw. Drehlage α des Antriebs entsprechen. Dazu ist die Nachlaufregelung 40 mit einem Integrator als Regler versehen, der eine Regeldifferenz auf Null ausregelt, welcher Zustand vorgibt, dass die Phasenlage des Signals am Ausgang der Nachlaufregelung der Lage des Antriebs entspricht.

Mit den Funktionseinheiten 40, 50 ist damit ein geschlossener Regelkreis charakterisiert. Aus dem Regelkreis wird das Betriebssignal u₅₃ des Resolvers, also das auf der Rotorwicklung induzierte Signal, auch einer Sicherheitsüberwachung 30 zugeführt, deren Innenleben anhand der Figur 1 später erläutert wird. Diese Sicherheitsüberwachung gibt ein Fehlersignal F aus, welches einen Zustand kennzeichnet, der im normalen Betrieb des Antriebs nicht auftreten sollte. Er kann einen Fehler der Mechanik oder Elektrik des Funktionsdrehmelders kennzeichnen, er kann aber auch eine überhöhte Drehzahl registrieren und zu einer Abschaltung führen.

Ein Verstimmungssignal im Sinne eines gesonderten, im Wesentlichen stationären Signals ε wird sowohl der Steuerschaltung 40 mit der Nachlaufregelung wie auch der Sicherheitsüberwachung 30 zugeführt. Damit wird dieses Signal einmal in den Regelkreis eingespeist und zum anderen außerhalb des Regelkreises in bekannter Höhe ebenfalls verwendet. Diese Gleichheit der Signale kann dazu verwendet werden, das Verstimmungssignal ε als Vergleichssignal (Prüfsignal) zu verwenden, das in der Überwachungsschaltung 30 mit einem Kontrollsignal vergleichen wird, welches aus dem Nutzsignal u₅₃ (als Betriebssignal des Resolvers 50) hergeleitet wird.

Die genauere Ausführung ist die **Figur 1**. Auch hier finden sich die beschriebenen Funktionen wieder, nur in einer spezifischen Realisierung. Die Realisierung kann in Schaltungstechnik entweder analog oder digital erfolgen. Die entsprechenden Bauelemente können dabei diskret, oder über Mikroprozessor-Technik realisiert sein. Es können auch kundenspezifische Bauteile Anwendung finden, auf denen Analog/Digital-Wandler platziert werden, Tabellen zum Auslesen eines Sinusverlaufes abgelegt sind und entsprechende Regelalgorithmen in Abtastregelung ausgeführt werden.

Ausgehend von dem schematisch dargestellten Drehmelder 50 mit seiner rotierenden Rotorwicklung 53 und dem von ihr abgegebenen Betriebssignal u₅₃ wird sowohl die Steuerschaltung 40, wie auch die Überwachungsschaltung 30 von diesem Signal gespeist. Die beiden Statorwicklungen 51 a, 51 b, die nicht dieselbe Orientierung haben (gegeneinander versetzt sind), werden von einer Ausgangsstufe 49 gespeist, die zwei phasenverschobene Signale bereitstellt. Diese werden als Cosinus und Sinus hier bezeichnet, wenn zwei Wicklungen im Drehmelder 50 vorgesehen sind.

In der Nachlaufregelung ist ein Nachlaufregler 42 als PI-Regler vorgesehen. Er hat zumindest einen Integralanteil, um für eine Regelabweichung Null zu sorgen. Diese Regelabweichung ergibt sich aus der Physik des Resolvers als in erster Näherung zur Differenz der Phasenlagen α und ϕ, genauer als Sinus dieser Differenz. Kann die Regeldifferenz auf Null geregelt werden, stimmt der Winkel α mit dem Winkel ϕ überein. Damit ist eine Lagebestimmung des Antriebs möglich. Vorgelagert, vor einem Winkelintegrator 43, wird eine Drehzahl gemessen, die mit ω(t) bezeichnet ist. Die Lage ergibt sich durch eine Integration der Drehzahl bei dem hier gewählten Messprinzip.

Ausgehend von der Drehlage ϕ(t) können über Tabellen zwei um 90° phasenversetzte Schwingungskurven u₅₁ₐ(t) und u_{51b}(t) zunächst digital und dann analog gebildet werden, die die Steuersignale für die beiden Statorwicklungen 51 a, 51 b bilden.

Sowohl der Ausgangsbereich der Steuerschaltung, Stellabschnitt 49 genannt, wie auch der Eingangsbereich 41 der Schaltungsanordnung 40, verwenden ein Trägerfrequenzsignal, das von einem Generator 44 ausgeht. Im Eingangsbereich dient dieses Signal zur Demodulation, während es im Ausgangsbereich zur Modulation der beiden phasenverschobenen Ausgangssignale verwendet wird. Als Trägerfrequenz findet eine Sinusschwingung Anwendung, die eine erhöhte Auflösung des Lagesignals möglich macht, bis hin zu 21 bit, statt wie bisher im wesentlichen 16bit, bei Verwendung eines digitalen Trägerfrequenz-Signals. Mit der Modulation im Ausgangsbereich (vor den A/D-Wandlern) kann eine Auflösung des Messgeber-Ausgangssignals u₅₃ auch bei langsamen Drehzahlen, bis hin zum Stillstand ermöglicht werden. Die Modulation sorgt für eine transformatorische Signalübertragung auch dann, wenn keine Relativbewegung der drei eingezeichneten Wicklungen (zwei im Stator, eine im Rotor) erfolgt. Andere Anzahlen von Wicklungen (beispielsweise drei Wicklungen im Stator als Dreiphasen-System) sind ebenfalls verwendbar.

In die Regelschleife greift ein Prüfsignal ε ein, das zuvor erläutert war. Dieses ist vor dem zumindest einen Integrator 42,43 hier an der Stelle der Regeldifferenz so eingefügt, dass es die Regeldifferenz verstimmt, bzw. verstellt. Ein Einfluss an dieser Stelle führt dazu, dass der Nachlaufregler an der nunmehr veränderten Regeldifferenz noch immer den Wert Null für den stationären Fall einstellt. Die Dynamik des Systems wird dadurch nicht beeinflusst, lediglich eine Veränderung der Lagemessung findet statt. Diese Lageveränderung durch Eingriff des Prüfwinkels ε als stationäres Signal kann in der Sicherheitsüberwachung 30 detektiert werden. Dazu wird der Sicherheitsüberwachung das Betriebssignal u₅₃ zugeführt. Eine A/D-Wandlung 31 findet statt. Danach wird das Signal gefiltert, wobei der Filter 32 im Beispiel aus einer Betragsbildung 32a und einem Tiefpass 32b besteht. Der Tiefpass 32b filtert die Hochfrequenzanteile aus, die durch die Demodulation im Eingangsbereich 41 der Steueranordnung 40 herausgenommen werden bzw. von der Modulation im Stellbereich 49 der Schaltungsanordnung 40 zu den oben genannten Zwecken eingefügt worden sind. Durch die Betragsbildung 32 ist sichergestellt, dass der Antrieb in beiden Richtungen sicherheitsüberwacht werden kann.

Es ergibt sich nach Filterung eine Kontrollgröße als Kontrollsignal u₃₂, welches mit dem Prüfsignal ε in einer Vergleicherschaltung 33 verglichen wird. Der Vergleich kann sich als eine Summenbildung (mit einem umgekehrten Vorzeichen) darstellen. Mit anderen Worten werden das Prüfsignal als Verstimmungssignal und das Kontrollsignal "subtraktiv kombiniert".

Es ergibt sich ein Signal u₃₃ als Differenzsignal. Dieses Signal sollte im fehlerfreien Zustand des Antriebs und ohne Störungen des Funktionsdrehmelders 50 im wesentlichen Null betragen. Leichte Auslenkungen bei dynamischen Stellvorgängen sind möglich, wie auch geringfügige Abweichungen hinsichtlich der Amplitude, so dass über einen Fensterkomparator 38 ein Fehlersignal F detektiert wird, das nicht zu empfindlich reagiert.

Dieses Fehlersignal F kann entweder in der Amplitude mit einer Spanne Δu₃₈ verglichen werden, innerhalb derer es nicht erzeugt wird, beispielsweise durch den Fensterkomparator 38. Es kann auch mit einer nicht dargestellten Zeitschaltung so verknüpft werden, dass ein Fehlersignal aktiv erst dann ausgegeben wird, wenn das gemessene Fehlersignal u₃₃ eine vorgegebene (minimale) Zeitspanne lang vorliegt. Diese Betriebsweise kann als eine "kurzzeitige Sperrung" angesehen werden.

Nicht dargestellt sind bekannte Antriebe und Abtriebe, die der Fachmann sinngemäß so ergänzt, dass sie mit dem Funktionsdrehmelder in eine geeignete mechanische Verbindung gebracht werden. Ebenfalls nicht dargestellt ist die eigentliche Steuerung bzw. Regelung, mit der der Antrieb betrieben wird, ausgehend von den mit der Figur 1 erfassten Drehgrößen, wie der Drehzahl oder der Lage, ergänzend ggf. auch einer gemessenen Beschleunigung.

Der Verlauf des Prüfsignals ist hier als Beispiel ein stationärer Prüfwinkel ε = constant vorgesehen, der langfristig die Steuerschaltung beeinflusst. Er wird durch die eigentliche Regelung des Antriebs nicht ausgeregelt.

Vergleichend wurde zuvor gegenübergestellt, dass das Betriebssignal u₅₃ im Eingangsbereich der Steuerschaltung 40 und im Eingangsbereich der Sicherheitsüberwachung 30 funktionell gleich behandelt wird. Vom Ergebnis her beträgt die eigentliche Regeldifferenz vor der Einflussnahme des Prüfwinkels ε, also vor der Additionsstelle 42a, im stationären Zustand Null. Damit sind die beiden Eingangsabschnitte funktionell gleich, selbst wenn sie schaltungstechnisch anders ausgeführt wird.

Nachdem die Summationsstelle 42a in der Sicherheitsüberwachung als Differenzbildner 33 arbeitet, ist erkennbar, dass sowohl am Fensterkomparator 38 (Differenzsignal u₃₃), wie auch am Eingang des Nachlaufreglers 42 stationär keine Signalkomponente anliegen sollte. Für den zu detektierenden unerwünschten Betriebszustand ist das anders. Zwar wird der Nachlaufregler für eine gewisse Zeitspanne noch immer eine Regeldifferenz auf Null regeln, aber hierbei hat der Fensterkomparator bereits angesprochen und zeigt einen unerwünschten Betriebszustand über das Fehlersignal F an, auch F(t) genannt, wobei in einem Beispiel F(t) = 0, wenn t > t_{F}, mit t_{F} = Zeitpunkt des Fehlerfalls.

Aus dieser vergleichenden Gegenüberstellung wird deutlich, dass gesondert von der Nachlaufregelung 40 eine unabhängige Beeinflussung des Betriebssignals u₅₃ erfolgt, um das Vorhandensein des amplitudenmäßig zu bewertenden Prüfwinkels überwachen zu können. Der zu detektierende Fehlerfall ergibt sich aus fehlender Kompensation in der Sicherheitsüberwachung 30, der mit Zeitverzögerung oder mit einer gewissen amplitudenmäßigen Toleranz Δu₃₈ als Fehlersignal F(t) dargestellt wird.

Die Ausgabe des Fehlersignals F erfolgt mit anderen Worten bei einer Abweichung bzw. einem Verlassen des Kompensationsfalls in der Sicherheitsüberwachung. Der Kompensationsfall ist der Zustand mit elektrisch und mechanisch ordnungsgemäß angeschlossenem und arbeitendem Funktionsdrehmelder 50. Dieser Kompensationsfall muss nicht eine völlige Kompensation der Signale in der Subtraktionsstelle 33 sein, sondern kann eine "Kompensation im wesentlichen" sein, wie sich durch Beschreibung der Toleranzspannung und der Zeitüberwachung vor einer definitiven Ausgabe des Fehlersignals F ergibt.

Signaldiagramme für das Ausführungsbeispiel werden im Folgenden erläutert. Sie sind in Figur 1 drei Punkten im Schaltungsplan zugeordnet. Die beiden Ausgangssignale u51a(t) und u51b(t) sind Signale mit einer Trägerfrequenz, welche durch den Modulator 44 moduliert sind. Diese Trägerfrequenz ist im "gesampleten" (abgetasteten) Signal nur andeutungsweise zu erkennen, während die Hüllkurve die Drehfrequenz des Rotors wiedergibt. Diese beiden Frequenzen sind deutlich unterschiedlich; das in der Nachlaufregelung verwendete Modulationssignal kann im Bereich von 4 bis 6 kHz liegen (vgl. Seite 4, letzter Absatz).

Das im Beispiel konstant angenommene Prüfsignal ε ist moduliert durch die Trägerfrequenz vom Modulator 44 als amplitudenmäßig kleines Signal ε' bei u53 ersichtlich, hier in Beispiel mit einer kleinen Amplitude unter 200mV.

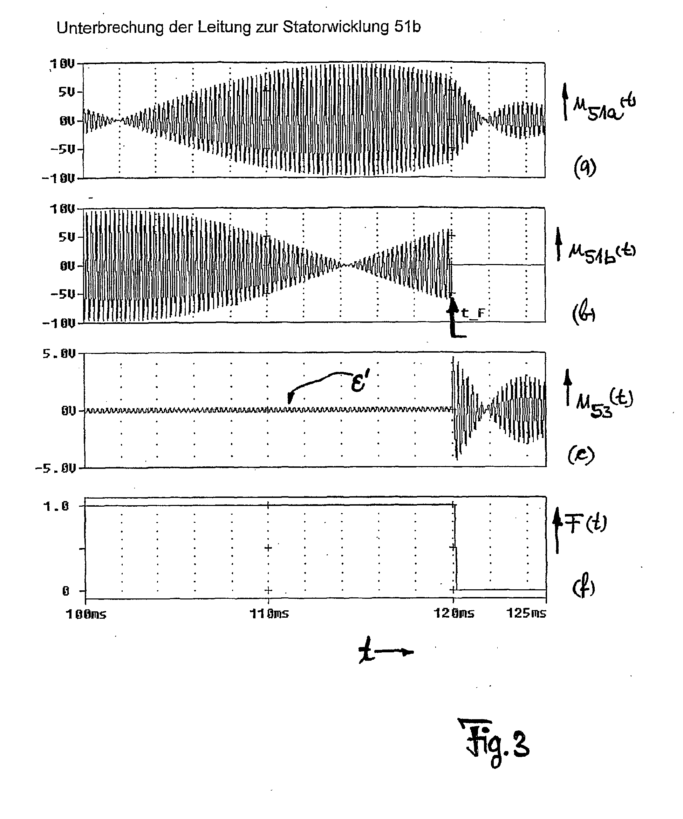

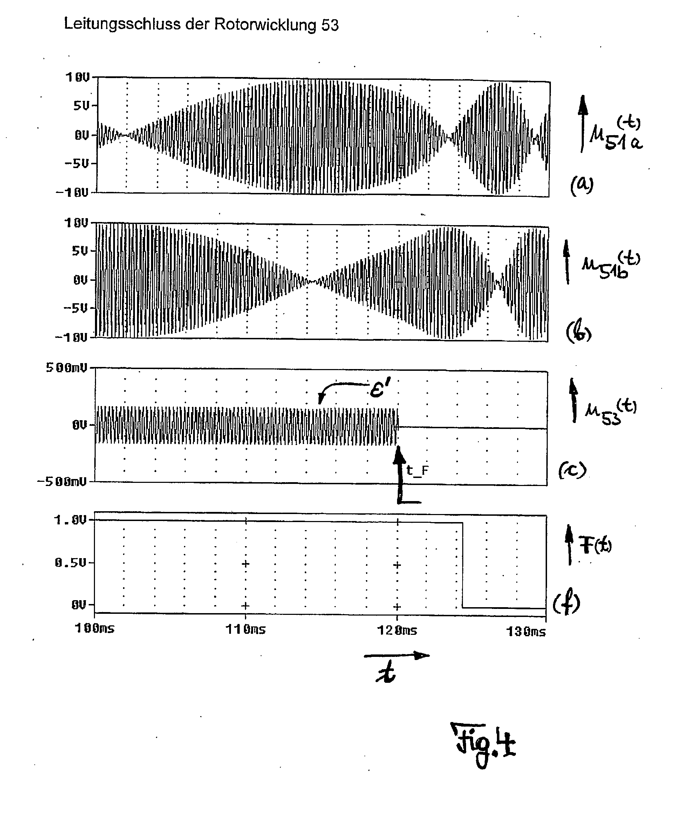

Für einen anzunehmenden Fehlerfall zeigen die **Figuren 3** **und** **4** unterschiedliche Fehler, bei einmal Stator (Figur 3) und einmal Rotor (Figur 4). Soweit der Rotor betroffen ist, handelt es sich um einen Leitungsschluss der Rotorwicklung 53, welcher durch eine Unterbrechung oder durch einen Kurzschluss zum angenommenen Zeitpunkt t_{F} eintritt. Dieses ist im dargestellten Beispiel zum Zeitpunkt 120 msec der Fall. Dies gilt für beide Figuren 3 und 4. Bei einer Unterbrechung der Leitungsführung zwischen dem Ausgang eines der Wandler 49 und dem Eingang einer der Wicklungen 51 a, 51 b dargestellt bei der Wicklung 51 b, fehlt nach dem genannten Zeitpunkt t_{F} das hier speisende Signal u51b(t), wie Figur 3, Abbildung (b) für diesen Fehlerfall veranschaulicht.

Das modulierte Prüfsignal ε' ist in beiden Fehlerfällen ersichtlich, in zwei unterschiedlichen Amplitudendarstellungen, vgl. jeweils das Diagramm (c) von Figuren 3 und 4. Das hier gezeigte Signal ε' ist das modulierte Signal ε, moduliert vom Modulator 44. Die beiden Ausgangssignale u51a(t) und u51b(t) werden als vom Modulator 44 modulierte Sinus-Cosinus-Signale gezeigt, im zeitlichen Bereich um den Fehlerfall herum, vgl. jeweils die Diagramme (a) und (b) von Figuren 3 und 4.

Nach Eintritt des Fehlerfalls zum Zeitpunkt t_{F} schaltet das Fehlersignal F der Diagramme (f) als Ausgang des Fensterkomparators 38 auf (logisch) Null. Damit wird das Fehlersignal F zu einem zeitabhängigen Signal F(t), wenn die Zeit die unabhängige Größe ist. Der im Beispiel der Figuren 3 und 4 zum Zeitpunkt 120 msec eintretende Fehlerfall wird bei einer Unterbrechung der Leitung zur Statorwicklung 51b praktisch sofort erkannt, durch einen sehr hohen Signalausschlag der Spannung u53(t). Auch ein fehlendes Signal ε' in Figur 4, Abbildung (c) wird als Fehlerfall erkannt, nur mit einer kleinen Zeitverzögerung von etwas mehr als 4 msec, aufgrund der in der Schaltung 30 vorgesehenen Verzögerung 32b und des gegebenen sehr geringen Signalausschlags des Prüfsignals am Ausgang der Wicklung 53.

Die gezeigten Fehlersituation zeigen, dass sowohl Fehler im Stator, wie auch Fehler von Leitungen zum Stator, wie auch Fehler im Rotor oder in Leitungen vom Rotor erfasst werden. Dafür sorgt die Zuführung des Prüfsignals ε nicht nur zu der Schaltung 40, sondern auch zur Prüfschaltung 30, wo sie bei Wegfall des Signals nach Figur 4, Abbildung (c) ausschlaggebend ist für die Veranlassung des Schaltens des Signals F, bei fehlender Kompensation durch die Subtraktionsstelle 33. Im anderen Fehlerfall nach Figur 3, Abbildung (c), ist der hohe Ausschlag über die Zeitverzögerung 32b maßgebend, welcher von dem sprunghaft stark ansteigenden Signal u53(t) ausgeht und auf die Überwachungsschaltung 30 Einfluss nimmt.

Der Tiefpass 32b als Bestandteil des Filters 32 mit der Betragsbildung 32a filtert Hochfrequenzanteile aus, welche (parallel) durch die Demodulation im Eingangsbereich 41 der Steueranordnung 40 herausgenommen werden. Diese Glättung 32b wirkt sich bei gegebenem Fensterkomparator 38 und vorgegebener Ansprechschwelle auf eine Zeitverzögerung aus, bis zum Ansprechen von F(t).

Je größer der Signalausschlag ist, vgl. Figur 3, Abbildung (c), oder bei geringerem Ausschlag Figur 4, Abbildung (c), desto schneller ist das Ansprechen des Fehlersignals F(t), jeweils dargestellt in den Figuren 3 und 4 in der Abbildung (f).

## Patentansprüche

1. **Verfahren** zum Erfassen von nicht erwünschten Betriebszuständen eines Antriebs oder einer Antriebseinrichtung, wobei
(a) ein transformatorisch zwischen einer Stator- und Rotorseite gekoppelter Messgeber (50) ein Betriebssignal (u₅₃) einer Steuerschaltung (40) zur Erfassung eines Lagewertes oder eines Drehzahlwertes des Antriebs zuführt, wobei die Steuerschaltung (40) eine Nachlaufregelung (42,49) ausführt, um zumindest einen Drehzahlwert (ω) oder einen Lagewert aus dem Betriebssignal (u₅₃) zu berechnen und abzugeben;
(b) einer Sicherheitsüberwachung (30) zur Bestimmung und Abgabe eines Fehlersignals (F) ein Prüfsignal (ε) zugeführt wird, welches Prüfsignal ebenso der Steuerschaltung (40) zugeführt wird;
(c) das Fehlersignal (F) abgegeben wird, wenn ein nicht erwünschter Betriebszustand eintritt.

2. Verfahren nach Anspruch 1, wobei der Sicherheitsüberwachung (30) und der Steuerschaltung (40) dasselbe Betriebssignal (u₅₃) des transformatorisch gekoppelten Messgebers (50) zugeführt wird.

3. Verfahren nach Anspruch 1, wobei der nicht erwünschte Betriebszustand ein Kurzschluss im Bereich des Messgebers (50) oder seiner Anschlussleitungen ist.

4. Verfahren nach Anspruch 1, wobei das Prüfsignal (ε) im Wesentlichen konstant ist.

5. Verfahren nach Anspruch 1 oder 4, wobei das Prüfsignal ein Winkelsignal ist.

6. Verfahren nach Anspruch 1 oder 5, wobei das Prüfsignal (ε) an einer Stelle der Steuerschaltung (40) angreift, welche vor zumindest einem Integrator (42,43) gelegen ist.

7. Verfahren nach Anspruch 1, wobei der nicht erwünschte Betriebszustand zumindest einer der folgenden ist
(i) Drehzahlüberhöhung;
(ii) Überschreiten einer vorgegebenen Grenzdrehzahl;
(iii) elektrischer Fehler im Messgeber (50);
(iv) elektrischer Fehler im Bereich von Anschlüssen oder Leitungsführungen des Messgebers (50);
(v) mechanischer Fehler im Bereich des Messgebers (50).

8. Verfahren nach Anspruch 1, wobei der Messgeber (50) ein Signalgeber ist, zur Bestimmung oder Berechnung zumindest eines Betriebssignals der Antriebstechnik an der Antriebseinrichtung.

9. Verfahren nach Anspruch 8, wobei der Messgeber ausgebildet ist als ein Funktionsdrehmelder oder Resolver.

10. Verfahren nach Anspruch 2, wobei die Sicherheitsüberwachung (30) das Betriebssignal (u₅₃) eingangs oder anfangs funktionell ebenso beeinflusst (31,32), wie die Steuerschaltung (40), aber gesondert davon.

11. Verfahren nach Anspruch 10, wobei die gesonderte Beeinflussung unabhängig von einer entsprechenden Beeinflussung in der Steuerschaltung (40) ist.

12. Verfahren nach Anspruch 10, wobei die gesonderte Beeinflussung eine AD-Wandlung und eine Glättung (32b) umfasst, zur Unterdrückung eines hochfrequenten Anteils (44) des Betriebssignals (u₅₃).

13. Verfahren nach Anspruch 12, wobei das beeinflusste, geglättete Betriebssignal mit dem Prüfsignal (ε) differenzbildend zusammengefasst wird (33), zum Erhalt eines Differenzsignals (u₃₃).

14. Verfahren nach Anspruch 13, wobei eine Toleranzspanne (Δu₃₈) mit dem Differenzsignal (u₃₃) verglichen wird, um das Fehlersignal (F;F(t)) abzugeben, wenn das Differenzsignal die Toleranzspanne verlässt.

15. Verfahren nach Anspruch 1, wobei der Messgeber (50) an einer Welle des Antriebs montiert ist, um abhängig von der Drehung der Welle das Betriebssignal (u₅₃) als Ausgangssignal einer mit der Welle mechanisch gekoppelten transformatorischen Wicklung (53) abzugeben.

16. Verfahren nach Anspruch 1, zum Erfassen bzw. Erkennen von nicht regelungstechnisch erfassbaren und ausregelbaren Störeinflüssen auf den Antrieb mit dem Messgeber (50), dessen Ausgangssignal (u₅₃) zur regelungstechnischen Regelung des Antriebs als Betriebssignal verwendet wird, wobei
(i) das Betriebssignal (u₅₃) als Nutzsignal und das Prüfsignal als Verstimmungssignal sowohl der dem Messgeber (50) nachgeordneten Steuerschaltung (40), wie auch der Überwachungsschaltung (30) zugeführt werden;
(ii) in der Überwachungsschaltung das Verstimmungssignal und das Nutzsignal subtraktiv kombiniert werden (33);
(iii) bei einem Verlassen einer durch die Kombination in der Überwachungsschaltung (30,33) erfolgenden Kompensation im Wesentlichen ein Fehlersignal (F;F(t)) generiert wird (38).

17. Verfahren nach Anspruch 16, wobei das Nutzsignal in der Überwachungsschaltung (30) geglättet, insbesondere auch gleichgerichtet wird (32a), bevor es subtraktiv kombiniert wird.

18. Verfahren nach Anspruch 16, wobei die Generierung des Fehlersignals (F) über eine betragsmäßige oder eine zeitmäßige Schwelle (Δu₃₈) kurzzeitig gesperrt wird (38).

19. Verfahren nach Anspruch 16, wobei ein niederfrequenter Anteil des Nutzsignals subtraktiv mit dem Verstimmungssignal kombiniert wird (33).

20. Verfahren nach Anspruch 1 oder 16, wobei das Prüfsignal als ein Verstimmungssignal (ε) ein zumindest stetiges Signal, insbesondere ein konstanter Wert ist.

21. Verfahren nach Anspruch 20, wobei der Wert eine Winkel- oder Lagegröße ist (ε).

22. Verfahren nach Anspruch 21, wobei die Lagegröße als Offset im gemessenen Lagewert vor einer Weitergabe an eine Regelung des Antriebs kompensiert wird.

23. **Messgeber** mit einem Stator und einem Rotor, zur Montage an einer Antriebswelle und Messung von Drehsignalen eines Antriebs, wie Drehzahl, Beschleunigung oder Lage (α,ω,ϕ), wobei
(1) eine Steuerschaltung (40) mit einer Nachlaufregelung (42,49) vorgesehen ist, welche über einen Stellabschnitt (49) zumindest zwei Wicklungen (51 a,51 b) des Messgeber (50) speist oder zur entsprechenden Speisung ausgebildet ist;
(2) eine relativ zum Stator rotierbare weitere Wicklung (53) auf dem Rotor des Messgebers (50) angeordnet ist, zur Abgabe eines Betriebssignals (u₅₃);
(3) eine gesonderte Überwachungsschaltung (30) vorgesehen ist, welcher ebenso wie der Steuerschaltung (40) das Betriebssignal zuführbar ist, zur Bestimmung und Abgabe eines Fehlersignals (F) bei Verlassen eines Kompensationsfalls.

24. Messgeber nach Anspruch 23, wobei der Steuerschaltung (40) ein Verstimmungssignal (ε) zuführbar ist, welches das Messergebnis des Messgebers dauerhaft verfälscht und in der Überwachungsschaltung (30) als Kontrollsignal (u₃₂,u₃₃) aus dem Betriebssignal (u₅₃) ausfilterbar ist.

25. Messgeber nach Anspruch 24, wobei das Verstimmungssignal (ε) auch der Überwachungs-Schaltung (30) zuführbar ist, um es mit dem gefilterten Kontrollsignal zu vergleichen, insbesondere subtraktiv zu kombinieren.

26. Messgeber nach Anspruch 23, wobei in der Steuerschaltung (40) ein Frequenzgeber (44) vorgesehen ist, um mit einem stetigen Signal, insbesondere Sinussignal, zumindest eine Modulation der Ausgangssignale (u_{51b},u₅₁ₐ) der Steuerschaltung (40) vorzunehmen.

27. Messgeber nach Anspruch 23, wobei die Überwachungs-Schaltung (30) gesondert von der Steuerschaltung (40) ist.

28. Messgeber nach Anspruch 23, wobei die Überwachungs-Schaltung (30) nicht am Messgeber (50) angeordnet ist.

29. Messgeber nach Anspruch 23, wobei die Steuerschaltung mit der Nachlaufregelung zumindest einen Integralregler (43) - insbesondere als einen PI-Regler - aufweist, welchem eine Regelabweichung zuführbar ist, die für einen stationären Zustand im Wesentlichen Null beträgt.

## Claims

1. **A method** for detecting undesired operating conditions of a drive or drive mechanism, wherein
(a) a sensor (50), which is transformer coupled between a stator side and a rotor side, provides an operating signal (u₅₃) to a control circuit (40) for detecting a position value or a rotational speed value of the drive, wherein the control circuit (40) executes a servo control (42, 49) for calculating and emitting at least one rotation speed value (ω) or position value from the operating signal (u₅₃);
(b) a safety monitoring device (30) for determining and emitting an error signal (F) is provided with a test signal (ε), which test signal is also provided to the control circuit (40);
(c) the error signal (F) is emitted when an undesired operating condition occurs.

2. The method according to claim 1, wherein the safety monitoring device (30) and the control circuit (40) are provided with the same operating signal (u₅₃) of the transformer coupled sensor (50).

3. The method according to claim 1, wherein the undesired operating condition is a short circuit in the area of the sensor (50) or its connecting leads.

4. The method according to claim 1, wherein the test signal (ε) is substantially constant.

5. The method according to claims 1 or 4, wherein the test signal is an angle signal.

6. The method according to claims 1 or 5, wherein the test signal (ε) interferes at a point of the control circuit (40) located before at least one integrator (42, 43).

7. The method according to claim 1, wherein the undesired operating condition is at least one of the following:
(i) an excessive rotational speed;
(ii) an exceeding of a predetermined limit speed;
(iii) an electrical failure in the sensor (50);
(iv) an electrical failure in the area of connections or lead paths of the sensor (50);
(v) a mechanical failure in the area of the sensor (50).

8. The method according to claim 1, wherein the sensor (50) is a signal generator for determining or calculating at least one operating signal of the drive technology at the drive mechanism.

9. The method according to claim 8, wherein the sensor is configured as a synchro resolver or resolver.

10. The method according to claim 2, wherein the safety monitoring device (30) influences (31, 32) the operating signal (u₅₃) initially in a functionally similar manner as the control circuit (40), but separately thereof.

11. The method according to claim 10, wherein the separate influencing is independent of a corresponding influencing in the control circuit (40).

12. The method according to claim 10, wherein the separate influencing comprises an A/D conversion and a smoothing (32b) for suppressing a high-frequency portion (44) of the operating signal (u₅₃).

13. The method according to claim 12, wherein the influenced, smoothed operating signal is combined (33) with the test signal (ε) in a difference forming manner for obtaining a difference signal (u₃₃).

14. The method according to claim 13, wherein a tolerance range (Δu₃₈) is compared with the difference signal (u₃₃) for emitting the error signal (F;F(t)) when the difference signal leaves the tolerance range.

15. The method according to claim 1, wherein the sensor (50) is mounted to a shaft of the drive for emitting the operating signal (u₅₃) as an output signal of a transformer-induced winding (53) mechanically coupled to the shaft in a manner independent of the rotation of the shaft.

16. The method according to claim 1, for detecting or identifying interference effects on the drive not detectable and adjustable by closed-loop control by means of the sensor (50), the output signal (u₅₃) of which is used as an operating signal for closed-loop control of the drive, wherein
(i) the operating signal (u₅₃) as a useful signal and the test signal as an imbalance signal are provided to both, the control circuit (40) downstream of the sensor (50) and the monitoring circuit (30);
(ii) the imbalance signal and the useful signal are subtractively combined (33) in the monitoring circuit;
(iii) an error signal (F;F(t)) is substantially generated (38) when a compensation effected by the combination in the monitoring circuit (30, 33) is left.

17. The method according to claim 16, wherein the useful signal is smoothed, in particular also rectified (32a) in the monitoring circuit (30) prior to subtractive combination thereof.

18. The method according to claim 16, wherein the generation of the error signal (F) is temporarily blocked (38) via an amount-related or time-related threshold (Δu₃₈).

19. The method according to claim 16, wherein a low-frequency portion of the useful signal is subtractively combined (33) with the imbalance signal.

20. The method according to claims 1 or 16, wherein the test signal as an imbalance signal (ε) is an at least continuous signal, in particular a constant value.

21. The method according to claim 20, wherein the value is an angle or position variable (ε).

22. The method according to claim 21, wherein the position variable, as an offset in the measured position value, is compensated **prior to** being passed on to a control of the drive.

23. **A sensor** having a stator and a rotor for assembly to a drive shaft and for measuring rotational signals of a drive, such as rotational speed, acceleration or position (α,α,ϕ), wherein
(1) a control circuit (40) including a servo control (42, 49) is provided, which feeds at least two windings (51a, 51b) of the sensor (50) via an actuating portion (49), or is configured for a corresponding feeding;
(2) a further winding (53) rotatable relative to the stator is disposed on the rotor of the sensor (50) for emitting an operating signal (u₅₃);
(3) a separate monitoring circuit (30) is provided which, as well as the control circuit (40), can be provided with the operating signal for determining and emitting an error signal (F) when a compensation case is left.

24. The sensor according to claim 23, wherein the control circuit (40) can be provided with an imbalance signal (ε), which permanently corrupts the measuring result of the sensor and can be filtered out, as a control signal (u₃₂,u₃₃), from the operating signal (u₅₃) in the monitoring circuit (30).

25. The sensor according to claim 24, wherein the imbalance signal (ε) can also be provided to the monitoring circuit (30) for comparing, in particular subtractively combining it with the filtered control signal.

26. The sensor according to claim 23, wherein a frequency generator (44) is provided in the control circuit (40) for implementing at least one modulation of the output signals (u_{51b},u₅₁ₐ) of the control circuit (40) by use of a continuous signal, in particular a sinusoidal signal.

27. The sensor according to claim 23, wherein the monitoring circuit (30) is separate from the control circuit (40).

28. The sensor according to claim 23, wherein the monitoring circuit (30) is not disposed at the sensor (50).

29. The sensor according to claim 23, wherein the control circuit including the servo control comprises at least one integral controller (43) - in particular a PI controller- to which a control deviation amounting to substantially zero in a stationary state can be provided.

## Revendications

1. **Procédé** de détection d'états de fonctionnement non désirés d'un entraînement ou d'un dispositif d'entraînement, dans lequel
(a) un capteur de mesure (50) couplé en transformation entre un côté stator et un côté rotor envoie un signal de fonctionnement (u₅₃) à un circuit de commande (40) pour détecter une valeur de position ou une valeur de vitesse de rotation de l'entraînement, le circuit de commande (40) mettant en oeuvre un asservissement de suivi (42,49) en vue de calculer et d'émettre au moins une valeur de vitesse de rotation (ω) ou une valeur de position à partir du signal de fonctionnement (u₅₃) :
(b) un signal d'essai (ε) est amené à une surveillance de sécurité (30) destinée à déterminer et émettre un signal d'erreur (F), ledit signal d'essai étant amené également au circuit de commande (40) ;
(c) le signal d'erreur (F) est émis lorsqu'il se produit un état de fonctionnement non désiré.

2. Procédé selon la revendication 1, dans lequel le même signal de fonctionnement (u₅₃) du capteur de mesure (50) couplé en transformation est amené à la surveillance de sécurité (30) et au circuit de commande (40).

3. Procédé selon la revendication 1, dans lequel l'état de fonctionnement non désiré est un court-circuit au niveau du capteur de mesure (50) ou de ses lignes de connexion.

4. Procédé selon la revendication 1, dans lequel le signal d'essai (ε) est sensiblement constant.

5. Procédé selon la revendication 1 ou 4, dans lequel le signal d'essai est un signal d'angle.

6. Procédé selon la revendication 1 ou 5, dans lequel le signal d'essai (ε) intervient à un emplacement du circuit de commande (40), qui se situe **en amont** d'au moins un intégrateur (42,43).

7. Procédé selon la revendication 1, dans lequel l'état de fonctionnement non désiré est l'un au moins des états suivants :
(i) la surélévation de la vitesse de rotation ;
(ii) le dépassement d'une valeur de rotation limite prédéterminée ;
(iii) le défaut électrique dans le capteur de mesure (50) ;
(iv) le défaut électrique au niveau des bornes ou du câblage du capteur de mesure (50) ;
(v) le défaut mécanique au niveau du capteur de mesure (50).

8. Procédé selon la revendication 1, dans lequel le capteur de mesure (50) est un générateur de signal destiné à déterminer ou calculer au moins un signal de fonctionnement de la technique d'entraînement au niveau du dispositif d'entraînement.

9. Procédé selon la revendication 8, dans lequel le capteur de mesure est réalisé sous la forme d'un synchro-décomposeur ou résolveur.

10. Procédé selon la revendication 2, dans lequel la surveillance de sécurité (30) influe fonctionnellement sur le signal de fonctionnement (u₅₃) du côté entrée ou initialement (31,32), tout comme le circuit de commande (40), mais séparément de celui-ci.

11. Procédé selon la revendication 10, dans lequel l'influence séparée est indépendante d'une influence correspondante dans le circuit de commande (40).

12. Procédé selon la revendication 10, dans lequel l'influence séparée comprend une conversion analogique-numérique et un lissage (32b) en vue d'une suppression d'une composante à haute fréquence (44) du signal de fonctionnement (u₅₃).

13. Procédé selon la revendication 12, dans lequel le signal de fonctionnement influencé et lissé est réuni avec le signal d'essai (ε) en formant une différence (33), afin d'obtenir un signal de différence (u₃₃)·

14. Procédé selon la revendication 13, dans lequel une marge de tolérance (Δu₃₈) est comparée au signal de différence (u₃₃) afin d'émettre le signal d'erreur (F ; F(t)), si le signal de différence quitte la marge de tolérance.

15. Procédé selon la revendication 1, dans lequel le capteur de mesure (50) est monté sur un arbre de l'entraînement, afin d'émettre le signal de fonctionnement (u₅₃) en fonction de la rotation de l'arbre pour le délivrer à titre de signal de sortie à un enroulement transformateur (53) couplé mécaniquement à l'arbre.

16. Procédé selon la revendication 1, pour détecter ou reconnaître des influences perturbatrices sur l'entraînement, qui ne peuvent pas être détectées et compensées par asservissement, au moyen du capteur de mesure (50) dont le signal de sortie (u₅₃) est utilisé comme signal de fonctionnement pour la régulation de l'entraînement par asservissement, dans lequel
(i) le signal de fonctionnement (u₅₃) est amené à titre de signal utile et le signal d'essai est amené à titre signal de désaccord aussi bien au circuit de commande (40) disposé en aval du capteur de mesure (50) qu'au circuit de surveillance (30) ;
(ii) le signal de désaccord et le signal utile sont combinés par voie soustractive (33) dans le circuit de surveillance ;
(iii) lorsqu'une compensation établie par la combinaison dans le circuit de surveillance (30,33) est abandonnée, sensiblement un signal d'erreur (F ; F(t)) est généré (38).

17. Procédé selon la revendication 16, dans lequel le signal utile dans le circuit de surveillance (30) est lissé, en particulier également redressé (32a), avant de le combiner par voie soustractive.

18. Procédé selon la revendication 16, dans lequel la génération du signal d'erreur (F) est brièvement bloquée (38) par un seuil relatif à l'amplitude ou au temps (Δu₃₈).

19. Procédé selon la revendication 16, dans lequel une composante à basse fréquence du signal utile est combinée par voie soustractive avec le signal de désaccord (33).

20. Procédé selon la revendication 1 ou 16, dans lequel le signal d'essai à titre de signal de désaccord (ε) est un signal au moins continu, en particulier une valeur constante.

21. Procédé selon la revendication 20, dans lequel la valeur est une grandeur d'angle ou une grandeur de position (ε).

22. Procédé selon la revendication 21, dans lequel la grandeur de position est compensée à titre de décalage (offset) dans la valeur de position mesurée **avant** d'être transmise à un asservissement de l'entraînement.

23. **Capteur de mesure** comportant un stator et un rotor, destiné au montage sur un arbre d'entraînement et à la mesure de signaux de rotation d'un entraînement, tels que la vitesse de rotation, l'accélération ou la position (α,ω,ϕ), dans lequel
(1) un circuit de commande (40) est pourvu d'un asservissement de suivi (42,49) qui alimente au moins deux enroulements (51a,51b) du capteur de mesure (50) par l'intermédiaire d'un élément actionneur (49), ou qui est conçu pour une alimentation correspondante ;
(2) un autre enroulement (53) en rotation par rapport au stator est agencé sur le rotor du capteur de mesure (50) en vue d'émettre un signal de fonctionnement (u₅₃) ;
(3) il est prévu un circuit de surveillance (30) séparé, auquel le signal de fonctionnement peut être amené tout comme au circuit de commande (40), afin de déterminer et d'émettre un signal d'erreur (F) lorsqu'un cas de compensation est abandonné.

24. Capteur de mesure selon la revendication 23, dans lequel un signal de désaccord (ε) peut être amené au circuit de commande (40), signal qui falsifie durablement le résultat de mesure du capteur de mesure et qui peut être filtré à titre de signal de contrôle (u₃₂,u₃₃) hors du signal de fonctionnement (u₅₃).

25. Capteur de mesure selon la revendication 24, dans lequel le signal de désaccord (ε) peut être amené également au circuit de surveillance (30), afin de le comparer au signal de contrôle filtré, en particulier de les combiner par voie soustractive.

26. Capteur de mesure selon la revendication 23, dans lequel un générateur de fréquence (44) est prévu dans le circuit de commande (40), afin de procéder, conjointement avec un signal continu, en particulier un signal sinusoïdal, à au moins une modulation des signaux de sortie (u_{51b},u₅₁ₐ) du circuit de commande (40).

27. Capteur de mesure selon la revendication 23, dans lequel le circuit de surveillance (30) est séparé du circuit de commande (40).

28. Capteur de mesure selon la revendication 23, dans lequel le circuit de surveillance (30) n'est pas agencé sur le capteur de mesure (50).

29. Capteur de mesure selon la revendication 23, dans lequel le circuit de commande comprenant l'asservissement de suivi comprend au moins un régulateur intégral (43) - en particulier sous forme de régulateur proportionnel et intégral - auquel peut être amené un écart de régulation qui est sensiblement zéro pour un état stationnaire.
